# EUROPÄISCHE PATENTSCHRIFT

(11) **EP 2 421 221 B1**
(45) Veröffentlichungstag und Bekanntmachung des Hinweises auf die Patenterteilung: **23.10.2013**
(21) Anmeldenummer: 11005818.7
(22) Anmeldetag: 10.06.2008
(51) Int. Cl.: H04L 29/06, H04L 12/407, H04L 9/16, H04L 9/32, G06F 21/00

(54) **Verfahren und Architekur zur Sicherung von Echtzeitdaten**
Method and architecture for securing real time data
Procédé et architecture de sécurisation de données en temps réel

(30) Priorität: 11.06.2007 AT 9032007
(43) Veröffentlichungstag der Anmeldung: 22.02.2012
(62) Teilanmeldung aus: 08756812.7
(73) Patentinhaber: FTS Computertechnik GmbH, 1040 Wien (AT)
(72) Erfinder: Kopetz, Hermann Prof. Dr., 2500 Baden (AT)
(74) Vertreter: Patentanwaltskanzlei Matschnig & Forsthuber OG

(56) Entgegenhaltungen:
- GB-A- 2 406 485
- US-B1- 7 194 620
- KYOUNG-DON KANG, SANG H. SON: "Towards Security and QoS Optimization in Real-TimeEmbedded Systems", ACM, 2 PENN PLAZA, SUITE 701 - NEW YORK USA, 31. Januar 2006 (2006-01-31), Seiten 29-34, XP040065803, DOI: 10.1145/1279711.1279718

## Beschreibung

Diese Erfindung betrifft ein Verfahren und eine verteilte Echtzeitcomputerarchitektur zur Sicherung der Integrität und Authentizität, und in weiterer Folge der Vertraulichkeit der im System verwalteten Echtzeitdaten.

Die zunehmende Öffnung der *Embedded Systeme* und deren Anbindung an das Internet erfordert innovative Verfahren und Architekturen, um die Datensicherheit (Security) dieser Systeme zu gewährleisten. Die vorliegende Erfindung legt ein Verfahren und eine Architektur offen, die die Authentizität und Integrität und in weiterer Folge die Vertraulichkeit der Echtzeitdaten in *Embedded Systems* unter den für diese Systeme charakteristischen Randbedingungen garantiert.

Die für viele *Embedded Systems* charakteristischen Randbedingungen sind:
- Das Hauptproblem der *Security* in Embedded Systems ist die Sicherstellung der *Authentizität* und *Integrität* der Daten, jedoch nicht sosehr deren *Vertraulichkeit.*
- Die Echtzeitdaten müssen rechtzeitig mit minimaler Verzögerung verarbeitet werden, um die Totzeit im System klein halten zu können und die Qualität der Regelung nicht herabzusetzen.
- Die für die Verschlüsselung der Echtzeitdaten zur Verfügung stehenden Ressourcen sind oft beschränkt.
- Es muss davon ausgegangen werden, dass das Wartungspersonal nicht immer vertrauenswürdig ist.
- Der Aufwand für die Administration der Security muss möglichst gering gehalten werden.

Das vorliegende Verfahren zur Gewährleistung der Authentizität und Integrität von Echtzeitdaten wurde unter Berücksichtigung der folgenden Prinzipien entwickelt:
- Es wird davon ausgegangen, dass alle Kommunikationskanäle öffentlich zugänglich (z.B. drahtlose Verbindungen, die ohne viel Aufwand abgehört werden können) und daher unsicher sind.
- Durch die Security-Mechanismen darf keine zeitliche Verzögerung in der Verarbeitung von Echtzeitdaten auftreten, damit die Qualität der Verarbeitung nicht negativ beeinflusst wird. Der Rechenaufwand für die Sicherung der Echtzeitdaten im Echtzeitbetrieb soll relativ gering sein.
- Echtzeitdaten haben oft eine beschränkte zeitliche Gültigkeit. Die Dauer, während der Echtzeitdaten vertraulich zu behandeln sind, soll einen Einfluss auf den notwendigen Aufwand, der zu deren Verschlüsselung erforderlich ist, haben.
- Es wird angenommen, dass das Personal, welches das Embedded System warten muss, nicht immer als vertrauenswürdig eingestuft werden kann. Die Security Mechanismen müssen auch funktionieren, wenn das Wartungspersonal nicht vertrauenswürdig ist.

Die vorliegende Erfindung hat zum Ziel, in einem verteilten Echtzeitcomputersystem die Authentizität und Integrität der Echtzeitdaten zu sichern. Das vorliegende Verfahren nimmt auf die besonderen Anforderungen der Echtzeitdatenverarbeitung Rücksicht, wie Rechtzeitigkeit der Übertragung von Echtzeitdaten und beschränkte Ressourcenverfügbarkeit. Durch die häufige Änderung eines asymmetrischen Schlüsselpaars wird verhindert, dass ein Angreifer einen Schlüssel knackt bevor er seine Gültigkeit verloren hat. Das vorliegende Verfahren kann auch erweitert werden, um die Vertraulichkeit von Echtzeitdaten sicherzustellen. Es lässt sich auch auf einem Multiprozessor System-on-Chip (MPSoC) effizient implementieren.

Das vorab beschriebene Ziel und andere neue Eigenschaften der vorliegenden Erfindung werden beispielhaft in der angeführten Zeichnung erläutert. In dieser zeigt
Fig. 1 den Aufbau eines verteilten Echtzeitsystems,
Fig. 2 die Arbeitsschritte innerhalb einer Periode des Echtzeitsystems,
Fig. 3 den Aufbau einer Nachricht, und
Fig. 4 die Nachrichtenfolge in der Start-up Phase.

Im folgenden Abschnitt wird eine Realisierung des neuen Verfahrens an einem möglichen Beispiel mit drei Rechnern **111**, **112**, **113**, einem Security Monitor **114** und einer *Certification Authority* **115** gezeigt. Weiters wird angenommen, dass es ein *Trusted Security Center* (oder eine ihr entsprechende Instanz) gibt, das sensible Start-up Daten sicher bereitstellt, und dass ein Zeitserver vorhanden sein kann, der die Zeit vorgibt.

Alle Rechner, auch die Rechner **111** bis **115**, haben Zugriff auf eine verteilte gemeinsame (sparse) Zeitbasis (siehe [6], Seiten 57, 58). Eine Zeitbasis ist *sparse,* wenn die Zeitbasis aus einer Folge von sich abwechselnden Intervallen der *Aktivität* und der *Ruhe* gebildet wird. Ereignisse, die in der Kontrolle des Systems sind (z.B. das Senden von Nachrichten), dürfen nur in einem Intervall der Aktivität stattfinden. Alle Ereignisse, die innerhalb des selben Aktivitätsintervalls auftreten, werden als gleichzeitig betrachtet. Ereignisse, die in verschiedenen Aktivitätsintervallen auftreten, sind in einer systemweit konsistenten zeitlichen Ordnung. Die Einführung der sparse Zeitbasis ermöglicht es, die Gleichzeitigkeit und die zeitliche Ordnung von Ereignissen systemweit konsistent festzustellen. Die Dauer des Aktivitätsintervalls und des Ruheintervalls wird von der Genauigkeit der gegebenen Uhrensynchronisation bestimmt. Die Uhrensynchronisation kann entweder zentral von einem Zeitserver durchgeführt werden, oder verteilt über einen fehlertoleranten Algorithmus realisiert werden. Ein Zeitserver ist ein Rechner, der entweder über eine genaue interne Zeitbasis verfügt und/oder Zugriff auf ein externs Zeitsignal, z.B, das GPS (General Positioning System) Signal hat, und der die Referenzeit vorgibt. Entsprechend dem vorgeschlagenen Verfahren können die Nachrichten, die die Zeitvorgabe enthalten, verschlüsselt sein.

Sowohl das Thema der sparse Zeitbasis wie auch der zentralen und verteilten Uhrensynchronisation sind in [6] ausführlich behandelt.

Das vorgeschlagene Verfahren basiert auf dem Einsatz eines *asymmetrischen Kryptosystems,* dem 1977 veröffentlichen RSA Verfahren [4], das nach seinen Erfindern Ronald L. Rivest, Adi Shamir und Leonard Adleman benannt ist. Im RSA Verfahren wird ein Schlüsselpaar generiert, wobei ein geheimer Schlüssel vom Ersteller der Daten zur Generierung einer *Signatur* verwendet und der dazugehörige öffentliche Schlüssel der Öffentlichkeit zur *Überprüfung der Signatur* zur Verfügung gestellt wird, um die Authentizität und Integrität der Daten überprüfen zu können. Es wird davon ausgegangen, dass der private Schlüssel nur mit sehr hohem Aufwand aus dem öffentlichen Schlüssel rekonstruiert werden kann. Die Generierung der Schlüssel erfolgt im RSA Verfahren durch die algebraische Manipulation großer Primzahlen. Der Aufwand (der sich in der benötigten Zeit äußert) für die Erstellung der Signatur und der Überprüfung der Signatur ist umso größer, je länger die Schlüssel sind. Jedoch ist auch die Sicherheit, d.h. die Zeit bis ein Schlüssel geknackt werden kann, umso größer, je länger der Schlüssel ist.

Das hier vorgestellte Verfahren verwendet in der Start-up Phase lange asymmetrische Schlüsselpaare und im Echtzeitbetrieb relativ kurze asymmetrische Schlüsselpaare und ändert diese kurzen Schlüsselpaare häufig. Damit wird im Echtzeitbetrieb der Aufwand und die benötige Zeit für die Ver- und Entschlüsselung gering gehalten, was in Echtzeitsystemen sehr wichtig ist. Die Länge des Schlüssels wird so gewählt, dass ein Angreifer innerhalb der Gültigkeitszeit eines Schlüssels kaum eine Chance hat, den Schlüssel zu knacken. Andere Verfahren, zum Beispiel das in [1] veröffentlichte Verfahren *(Method for real-time data authentication),* verwenden Schlüsselhierarchien mit langen Schlüsseln, um die Sicherheit zu erhöhen ohne auf die Rechtzeitigkeit der Daten explizit Bezug zu nehmen. Im vorgestellten Verfahren werden in der Start-up Phase lange Schlüssel verwendet, um einer *Certification Authority* **115** die unmittelbar nach dem Startup gültige Assoziation zwischen Senders und den öffentlichen Entschlüsselungsschlüsseln der Rechner authentisch und sicher mitteilen zu können.

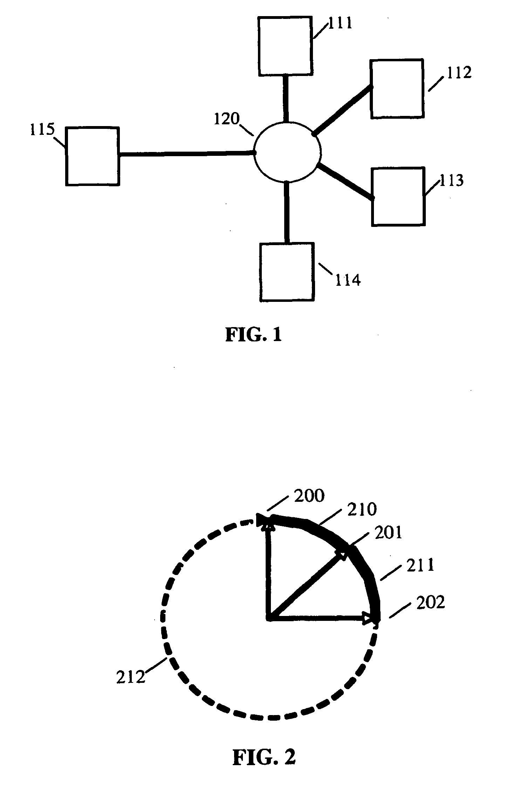

In Fig. 1 ist die Struktur eines typischen verteilten Echtzeitsystems dargestellt. Es wird angenommen, dass alle Rechner Zugriff auf eine globale Zeit haben, die z.B. mittels des IEEE Standards 1588 [5] aufgebaut werden kann und mittels des hier beschriebenen Verfahrens sicher verteilt wird. Im Beispiel der Fig. 1 erfasst der Rechner **111** Echtzeitdaten. Diese Echtzeitdaten werden über das Echtzeitkommunikationssystem **120** an den Verarbeitungs-Rechner **112** weitergeleitet. Dieses Echtzeitkommunikationssystem kann auf der Basis von Ethernet [3] oder TT Ethernet [2] oder einem anderen Echtzeitkommunikationssystem funktionieren. Nach der Verarbeitung sendet der Verarbeitungs-Rechner **112** über das Echtzeitkommunikationssystem **120** die Stellgrößen an den Rechner **113** zur Ausgabe an den zu regelnden technischen Prozess. Der Rechner **114** ist ein *Security Monitor,* der die Sicherheit der sensiblen Echtzeitnachrichten, d.s. Nachrichten, deren Inhalt auf Integrität und Authentizität geprüft werden müsse, überprüft. Der Security Monitor **114** bekommt vom Kommunikationssystem **120** eine Kopie aller *sensiblen* Nachrichten, wie dies beispielsweise aus [7] bekannt ist. Eine Nachricht ist *authentisch und integer,* wenn die Signatur der Nachricht, die vom authorisierten Sender mit dem geheimen Teil eines asymmetrischen Schlüsselpaars errechnet wurde, mit dem Inhalt der Nachricht übereinstimmt, wobei die Überprüfung mittels des öffentlichen Teils dieses asymmetrischen Schlüsselpaars erfolgt. Durch diese Trennung der Verarbeitungsfunktion in den Rechnern **112** und **113** von der Security-Überprüfungsfunktion im Rechner **114** wird erreicht, dass der Verarbeitungsaufwand (und damit die Verarbeitungszeit) in den Rechner **112** und **113** innerhalb der zeitlichen kritischen Regelschleife durch die Sicherungsmaßnahmen nicht erhöht wird. Damit wird verhindert, dass die Sicherheitsuberprüfung negative Auswirkungen auf die Qualität einer Regelschleife hat.

In Fig. 2 ist der zeitliche Ablauf einer Periode im Datenerfassungsrechner **111** in zyklischer Form dargestellt. Zu Beginn jeder Periode **200** wird mit der Erfassung der variablen Echtzeitdaten einer *Beobachtung* begonnen. Eine *Beobachtung* ist ein atomares Triple, bestehend aus dem Namen der Beobachtung, dem Zeitpunkt der Beobachtung und dem Wert der Beobachtung, der innerhalb seiner Gültigkeitszeit verarbeitet werden muss [6]. Im Intervall **210** werden die erfassten Daten vorverarbeitet und zum Zeitpunkt **201** wird mit der Übertragung der Daten an den Verarbeitungs-Rechner **112** und dem Security Monitor **114** begonnen. Erfingdungsgemäß wird in dem Zeitintervall **211** zwischen den Zeitpunkten **201** und **202** eine Signatur über die Beobachtung mittels des zu diesem Zeitpunkt gültigen geheimen Verschlüsselungsschlüssels errechnet. Diese Signatur wird in die Echtzeitnachricht der nächst folgenden Periode eingebettet. Der Security Monitor **114** überprüft, nachdem er in der nächsten Periode die Signatur der vorab empfangenen Echtzeitnachricht erhalten hat, mit dem ihm bekannten öffentlichen Schlüssel, ob die Signatur mit dem Inhalt der vorab empfangenen Echtzeitnachricht übereinstimmt. Der öffentliche Schlüssel, mittels dessen die Signatur überprüft wird, kann auch direkt in der Echtzeitnachricht enthalten sein. Der Security Monitor sendet periodisch eine gesicherte Echtzeitnachricht über die Ergebnisse der Security-Überprüfung an die *Certification Authority* **115** oder eine andere Instanz, der die Security Verwaltung obliegt.

Nach der Berechnung der Signatur über die vorangegangene Beobachtung beginnt der Rechner **111** zum Zeitpunkt **202** mit der Berechnung eines neuen asymmetrischen Schlüsselpaars. Als Ausgangspunkt für die Berechnung des neuen Schlüsselpaares wird eine Funktion über das Bitmuster des Berechnungsstartzeitpunkts genommen, da sich dieses Bitmuster der Zeitdarstellung innerhalb der Lebensdauer eines Systems nicht wiederholt. Da die Berechnung eines neuen Schlüsselpaars aufwendig ist und innerhalb eines Intervalls **212** vor dem nächsten Datenerfassungszeitpunkts **200** nicht abgeschlossen sein wird, wird diese Background Berechnung am Beginn der nächsten Periode zum Zeitpunkt **200** unterbrochen, um die in der nächsten Periode anfallenden Echtzeitaufgaben rechtzeitig erledigen zu können. Nach Fertigstellung dieser periodischen Echtzeitaufgaben zum Zeitpunkt **201** bzw. **202** wird die Schlüsselberechnung im Intervall **212** fortgesetzt, bis ein Ergebnis gefunden wird. Nach Vorliegen des neuen Schlüsselpaars wird der öffentliche Teil des neuen Schlüssels als Teil einer mit dem alten Schlüssel gesicherten Echtzeitnachricht einschließlich des Zeitpunkts, ab wann der neue Schlüssel verwendet wird, verteilt. Die Bekanntgabe des neuen Schlüssels erfolgt in einer Folge von *n* Nachrichten, um den Verlust von *(n-1)* Nachrichten tolerieren zu können.

Die vorab beschriebene Architektur zur Sicherung der Integrität und Authentizität der Echtzeitdaten kann auch verwendet werden, um die Vertraulichkeit von Daten zu gewährleisten. Wenn von einem Rechner, z.B. dem Rechner **111**, Daten an den Rechner **112** vertraulich geschickt werden sollen, so schickt der Rechner **112** den öffentlichen Teil eines asymmetrischen Schlüssels mittels einer entsprechend dem beschriebenen Verfahren die Authentizität und Integrität wahrenden Nachricht an den Rechner **111**, der dann die Daten mit diesem empfangenen Schlüssel zu einem Geheimtext verschlüsselt. Nun ist nur der Rechner **112**, der den geheimen Teil des asymmetrischen Schlüsselpaars kennt, in der Lage, aus dem Geheimtext den Klartext wieder herzustellen.

Die Länge des zur Verschlüsselung von vertraulichen Daten zu verwendenden asymmetrischen Schlüssels hängt von der Dauer ab, während der die Daten vertraulich behandelt werden müssen. Wenn diese Dauer sehr lang ist, muss ein langer Schlüssel gewählt werden. In Echtzeitsystem haben jedoch in vielen Fällen die Echtzeitdaten nach kurzer Dauer ihren Nutzen verloren, so dass oft ein kurzer Schlüssel ausreicht.

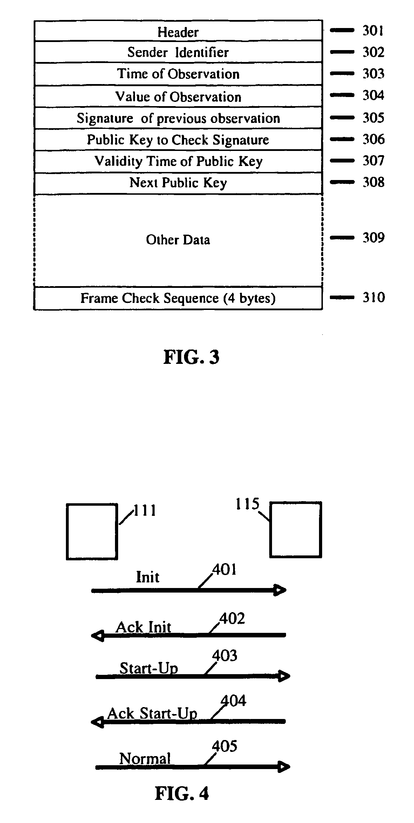

Fig. 3 zeigt den möglichen Aufbau einer Echtzeitnachricht. Nach dem Header **301** findet sich die Sender-ID im Feld **302**, der Zeitpunkt der Beobachtung im Feld **303**, der Wert der Beobachtung im Feld **304**, die Signatur über den gesamten Inhalt der Beobachtung der vorangegangenen Nachricht im Feld **305**, der zur Überprüfung der Signatur der Nachricht zu verwendende öffentliche Schlüssel in Feld **306**, der Gültigkeitsendzeitpunkt dieses öffentlichen Schlüssels in Feld **307**, und der ab diesem Gültigkeitszeitpunkt anzuwendende neue Schlüssel im Feld **308.** Vor der Frame Check Sequence in Feld **310** befinden sich in Feld **309** sonstige, nicht sensible, Daten.

Erfindungsgemäß sendete der Security Monitor **114** eine periodische mit seiner Unterschrift signierte Nachricht an die Security Authority **115** oder eine andere Security Instanz, um über die in der vergangenen Periode durchgeführten Security-Überprüfungen zu berichten. Wenn diese periodische Nachricht über Security-Verletzungen berichtet oder die Nachricht ausbleibt, so ist von der Security Authority **115** ein Security Alarm auszulösen.

Wenn im Header **301** einer Nachricht ein spezielles Bit gesetzt ist, das bedeutet, dass in dieser Nachricht sensible Informationen enthalten sind, so ist diese Nachricht vom Switch **120** an den Security Monitor zu senden. Diese Funktion des Switches muss *tamper-resistant* ausgeführt sein. Eine Funktion ist *temper-resistant* implementiert, wenn es einer nicht autorisierten Instanz nicht möglich ist, die Funktion zu ändern. Die Zeit ist eine besondere Art von vorhersehbarer Echtzeitinformation. Die **Verteilung** der Zeit in der Form einer Synchronisationsnachricht lässt sich somit mittels des beschriebenen Verfahrens sichern. Da die Signatur der Synchronisationsnachricht bereits vor dem Zeitpunkt, zu dem die Synchronisationsnachricht gesendet wird, errechnet werden kann, ist es möglich, den Zeitwert und die Signatur des Zeitwerts, in einer einzigen Synchronisationsnachricht zu senden.

Fig. 4 zeigt eine mögliche Nachrichtenfolge in einer gesicherten Startup-Phase des Rechners **111**. Unmittelbar nach *Power-up* des Rechners **111** sendet der Rechner **111** eine Initialisierungs (Init) Nachricht **401** an die Certification Authority (CA) **115**. Diese Init Nachricht **401** enthält die Sender-ID des Rechners **111**. Die CA **115** überprüft, ob die Sender-ID in der ihr *a priori* bekannten Systemkonfiguration enthalten ist. Diese *a priori* bekannte Systemkonfiguration gibt an, welche Sender IDs in welcher Rolle in dem konkreten Echtzeitsystem Verwendung finden. Bei positivem Ausgang der Überprüfung antwortet die CA **115** mit einer Ack-Init Nachricht **402.** Die Ack-Init Nachricht **402** enthält die aktuelle Zeit, den aktuellen öffentlichen Schlüssel zur Überprüfung der Signatur des Zeitservers und eine Signatur, die mit dem geheimen Teil eines langen asymmetrischen Ack-Init Schlüsselpaars erstellt wurde. Dieser geheime Teil des Ack-Init Schlüsselpaars muss in der CA 115 *tamper-proof* implementiert sein. Eine Datenstruktur ist *tamper-proof* implementiert, wenn es nicht möglich ist, die Datenstruktur zu lesen ohne den Bauteil zu zerstören. Der Rechner **111** hat sicheres *a priori* Wissen über den öffentlichen Teil des Ack-Init Schlüsselpaars zur Überprüfung der Signatur dieser Ack-Init Nachricht **402** und überprüft mittels dieses Schlüssels, ob die Signatur mit dem Inhalt der Ack-Init **402** Nachricht übereinstimmt. Wenn diese Überprüfung positiv ist und die in der Init-Ack Nachricht enthaltene Zeit mit der Zeit vom Zeitserver übereinstimmt, schließt der Rechner **111**, dass er sich in einer *ordentlichen* Umgebung befindet und antwortet mit einer Start-up Nachricht **403**, die folgende Informationen enthält: die Sender-ID, den zu verwendenden öffentlichen Schlüssel zur Überprüfung der Signatur der vom Rechner **111** unmittelbar nach dem Startup produzierten Echtzeitnachrichten und den Zeitpunkt, ab wann dieser Schlüssel zu verwenden ist. Die Sicherung der Authentizität und Integrität dieser Start-up Nachricht **403** vom Rechner **111**, die nicht zeitkritisch ist, erfolgt durch eine Signatur mittels eines langen asymmetrischen Start-up Schlüsselpaars. Die Assoziation zwischen der Sender-ID und dem öffentliche Teil dieses Start-up Schlüsselpaars ist der CA *a priori* als sicher bekannt. Die Assoziationen zwischen dem öffentlichen langen Start-up Schlüsseln der Sender und der zugehörigen Sender-IDs müssen in der *Certification Authority* **115** *tamper-resistent* gespeichert sein. Eine Datenstruktur ist *temper-resistent* implementiert, wenn es einer nicht autorisierten Instanz nicht möglich ist, die Datenstruktur zu ändern. Die *Certification Authority* **115** kann auch von einem *Trusted Security Center* (oder einer ihm entsprechenden Instanz) die Assoziation zwischen Sender-ID **111** und dem öffentlichen Start-up Schlüssel zur Überprüfung der Signatur der Start-up Nachrichten **403** des Rechners **111** anfordern. *Diese* Verbindung zwischen dem *Trusted Security Center* und der *Certification Authority* **115** muss sicher sein. Diese Verbindung kann durch einen langen symmetrischen Schlüssel, den nur die *Certification Authority* **115** und das *Trusted Security Center* kennt, gesichert werden. Diese Verbindung ist von den normalen Wartungsarbeiten am Echtzeitsystem nicht betroffen. Nach Empfang der Startup Nachricht **403** vom Rechner **111** durch die CA **115** antwortet die CA mit einer Startup-Ack Nachricht **404**, die den Rechner **111** informiert, dass die Assoziation zwischen Sender-ID der Rechners **111** und dem öffentlichen Teil des Schlüssels zur Überprüfung der vom Rechner **111** produzierten Signaturen in der CA gespeichert ist. Nach Empfang der Startup-Ack Nachricht **404** durch den Rechner **111** beginnt der Rechner **111** mit dem Senden der normalen Echtzeitnachrichten **405**.

Auf Anfrage bestätigt die CA **115** jedem Anfrager die zu einem Zeitpunkt gültige Assoziation zwischen Sender-ID und öffentlichem Schlüssel eines Rechners zur Überprüfung der Signatur einer Nachricht des Senders mit der genannten Sender-ID.

**Die** Sender-ID und der öffentliche Teil des Ack-Init Schlüsselpaars müssen im Rechner **111** *tamper-resistent implementiert sein.* Der geheime Teil des langen asymmetrischen Start-up Schlüssels, der nach dem Startup verwendet wird, muss im Rechner **111** *tamper-proof implementiert* sein.

Die beschriebene Rechnerkonfiguration aus Fig. 1 kann auch auf einem Multi-prozessor System-on-Chip (MPSoC) effizient realisiert werden, wobei die Funktion des Switches **120** von einem Network-on-Chip und die Funktion der Rechner **111**,**112** und **113** von den Cores des MPSoC übernommen wird. Ein ausgezeichnetes Core **114** übernimmt die Funktion des *Security Monitors* (Security Servers) und überprüft alle an den MPSoC gesendeten Daten auf ihre Integrität und Authentizität.

Die folgende Tabelle informiert über die Vertraulichkeitsanforderungen der in dieser Architektur zu speichernden security-relevanten Daten:

| Daten Element | Ort | Status | Implementierung |
|---|---|---|---|
| Öffentlicher Teil des Ack-Init Schlüsselpaars von der CA **115** | Rechner | public | Tamper resistant |
| Geheimer Teil des Ack-Init Schlüsselpaars | CA | geheim | Tamper proof |
| Öffentlicher Teil des Start-up Schlüsselpaars in Rechner **111** | CA | public | Tamper resistant |
| Geheimer Teil des Start-up Schlüsselpaars in Rechner **111** | Rechner | geheim | Tamper proof |
| Sender-ID in Rechner **111** | Rechner | public | Tamper resistant |
| Assoziation zwischen Sender ID und dem öffentlichen Teil des Start-up Schlüsselpaar von Rechner **111** | CA | public | Tamper resistant |

Die hier beschriebene konkrete Realisierung der Erfindung stellt nur eine von vielen Realisierungsmöglichkeiten dieser Erfindung dar.

Diese Erfindung bietet folgende ökonomische Vorteile:
- Die Authentizität und Integrität der in einem offenen Netzwerk übertragenen Echtzeitdaten wird gewährleistet.
- Die Qualität der Echtzeitdatenverarbeitung (Totzeit in Regelschleifen) wird durch die Sicherungsmaßnahmen nicht beeinträchtigt.
- Falls gewünscht kann auch die Vertraulichkeit der Echtzeitdaten hergestellt werden.
- Dieses Verfahren erfordert geringe Änderungen in der Architektur bestehender Echtzeitsysteme.
- Das Verfahren lässt sich auf den neuen MPSoCs effizient implementierten.

### Zitierte Patente:

[1] US 7,194,620 , March 20, 2007, Hayes, Method for real-time data authentication
[2] EP 1512254, Oct 5, 2005, Communication Method and System for Transmitting Timed and Event Driven Ethernet Messages

### Sonstige Literatur:

[3] IEEE Ethernet Standard 802.3 , URL: http://standards.ieee.org
[4] Wikipedia, RSA Kryptosystem, June 2007, URL: http://de.wikipedia.org/wiki/RSA-Kryptosystem
[5] IEEE Standard 1588 zur Uhrensynchronisation, URL: http://standards.ieee.org
[6] Kopetz, H. (1997). Real-Time Systems, Design Principles for Distributed Embedded Applications; ISBN: 0-7923-9894-7. Boston. Kluwer Academic Publishers.
[7] GB 2 406 485 A

## Patentansprüche

1. Verteiltes Echtzeitsystem, bestehend aus einer Vielzahl von Rechnern (Rechner **111**, **112**, **113**, **114**), die über einen zentralen Switch (**120**) verbunden sind und wo jeder Rechner periodisch Echtzeitnachrichten mit Echtzeitdaten an die anderen Rechner senden kann, und wo zwischen *sensiblen* und *nicht sensiblen* Echtzeitnachrichten unterschieden wird, und wo die sensiblen Echtzeitnachrichten die sensible Echtzeitdaten erhalten durch eine a priori festgelegte Kennung im Datenfeld gekennzeichnet sind, und wo alle Rechner Zugriff auf eine gemeinsame sparse Zeitbasis haben und wo jeder Rechner über mindestens einen geheimen asymmetrischen Schlüssel zur Erstellung einer Signatur einer Datenstruktur verfügt, und wo der Schlüssel zur Überprüfung der Signatur der Öffentlichkeit bekannt ist, wobei
der Switch (**120**) alle sensiblen Echtzeitnachrichten neben dem in der Echtzeitnachricht vermerkten Empfänger auch zusätzlich an einen ausgezeichneten Rechner, den sogenannten Security Server (**114**), sendet, und wobei
ein weiterer Rechner (**115**) die Rolle einer *Certification Authority* (*CA*) wahrnimmt, die die Authentizität des öffentlichen Schlüssel eines Rechners bestätigt, und wobei der Security Server (**114**) die Authentizität und Integrität der von ihm vom Switch (**120**) empfangenen sensiblen Echtzeitnachrichten überprüft, wobei alle Rechner Zugriff auf eine gemeinsame *sparse* Zeitbasis haben, und wo jeder Rechner über mindestens einen geheimen asymmetrischen Schlüssel zur Erstellung einer Signatur verfügt, und wo der zugehörige öffentliche Schlüssel, der zur Überprüfung der Authentizität und Integrität der signierten Datenstruktur erforderlich ist, von der *certification authority* (*CA*) (**115**) anforderbar ist, und wobei unmittelbar nach Power-up eines Rechners (**111**) ein sicheres Start-up Protokoll mit der *Certification Authority* (*CA*) (**115**) mit langen asymmetrischen Schlüsselpaaren abgewickelt wird, und wo nach Beendigung der Start-up Phase im Echtzeitbetrieb kurze asymmetrische Schlüsselpaare zur Sicherung der Authentizität und Integrität der Echtzeitdaten verwendet werden, wobei die Schlüsselpaare häufig geändert werden, und wobei, aufbauend auf die gesicherte Authentizität und Integrität der Daten, die Vertraulichkeit mit asymmetrischen Schltisselpaaren gewährleistet wird, wobei die Länge der verwendeten Schlüssel von der Dauer abhängt, während der die Vertraulichkeit der Echtzeitdaten gewährleistet werden muss.

2. Verteiltes Echtzeitsystem nach Anspruch 1, **dadurch gekennzeichnet, dass** das Senden der sensiblen Echtzeitnachrichten an den ausgezeichneten Rechner (**111**) durch den Switch (**120**) *tamper-resistant* ausgeführt ist.

3. Verteiltes Echtzeitsystem nach Anspruch 1 oder 2, **dadurch gekennzeichnet, dass** nach Beendigung der gesicherten Start-up Phase unmittelbar nach der Erfassung der Echtzeitdaten einer Beobachtung eine Echtzeitnachricht, die die Beobachtung im Klartext enthält, gebildet und übertragen wird, und wo in der nächsten periodischen Echtzeitnachricht eine Signatur über die in der vorangegangen Echtzeitnachricht übermittelte Beobachtung enthalten ist, wobei diese Signatur unter Verwendung des nur dem sendenden Rechner bekannten geheimen Schlüssel erstellt wurde und mit dem zugehörigen öffentlichen Schlüssel überprüft werden kann.

4. Verteiltes Echtzeitsystem nach einem der Ansprüche 1 bis 3, **dadurch gekennzeichnet, dass** in einem die Daten empfangenden Rechner ein dedizierter Prozess unter Verwendung des öffentlichen Schlüssels feststellt, ob die in einer Periode empfangenen Daten mit der in der nächsten Periode empfangenen zugehörigen Signatur übereinstimmen.

5. Verteiltes Echtzeitsystem nach einem der Ansprüche 1 bis 4, **dadurch gekennzeichnet, dass** der öffentliche Schlüssel zur Überprüfung der Integrität und Authentizität der Daten einer Echtzeitnachricht Teil der Echtzeitnachricht ist.

6. Verteiltes Echtzeitsystem nach einem der Ansprüche 1 bis 5, **dadurch gekennzeichnet, dass** der dedizierte Prozess, der die Überprüfung der Echtzeitdaten vornimmt, durch Kommunikation mit der *Certification Authority* (**115**) überprüft, ob der in einer Echtzeitnachricht enthaltene öffentliche Schlüssel authentisch ist.

7. Verteiltes Echtzeitsystem nach einem der Ansprüche 1 bis 6, **dadurch gekennzeichnet, dass** der geheime Schlüssel zur Erstellung der Signatur und der öffentliche Schlüssel zur Überprüfung der Signatur im Echtzeitbetrieb immer wieder geändert werden.

8. Verteiltes Echtzeitsystem nach einem der Ansprüche 1 bis 7, **dadurch gekennzeichnet, dass** ein sendender Prozess, sobald die Echtzeitverarbeitung einer Periode abgeschlossen ist, im Background ein neues asymmetrisches Schlüsselpaar generiert und den neuen öffentlichen Schlüssel einschließlich dessen Gültigkeitsbeginnzeitpunkts in mehreren mit dem alten Schlüssel signierten Echtzeitnachrichten vor Ablauf der Gültigkeit des alten Schlüssels ankündigt, und wo der sendende Prozess ab dem angegebenen Gültigkeitsbeginnzeitpunkt den nur ihm bekannten geheimen Teil des Schlüssels zur Erstellung der Signatur einer Beobachtung verwendet.

9. Verteiltes Echtzeitsystem nach einem der Ansprüche 1 bis 8, **dadurch gekennzeichnet, dass** unmittelbar nach *Power-up* eines Rechners (**111**) dieser Rechner eine Initialisierungs(Init)-Nachricht (**401**) mit seiner Sender-ID an die Certification Authority (CA) (**115**) sendet und wo die Certification Authority (CA) (**115**) überprüft, ob diese Sender-ID in der ihr *a priori* bekannten Systemkonfiguration enthalten ist, und wobei die Certification Authority (CA) (**115**) bei positivem Ausgang der Überprüfung mit einer Ack-Init Nachricht (**402**) antwortet, die die aktuelle Zeit, den aktuellen öffentlichen Schlüssel zur Überprüfung der Signatur eines Zeitservers und eine Signatur, die mit dem geheimen Teil eines langen asymmetrischen Ack-Init Schlüsselpaars erstellt wurde, enthält, und wo der geheime Teil des Ack-Init Schlüsselpaars in der Certification Authority (CA) (**115**) *tamper-*proof implementiert ist, und wo der Rechner (**111**) den öffentlichen Teil des Ack-Init Schlüsselpaars zur Überprüfung der Signatur dieser Ack-Init Nachricht (**402**) *a priori* kennt, und wo der Rechner (**111**) mittels dieses Schlüssels überprüft, ob die Signatur und der Inhalt der Ack-Init (**402**) Nachricht übereinstimmen, und wo der Rechner (**111**) weiters überprüft ob, die in der Ack-Init Nachricht enthaltene Zeit mit der sicheren Zeit vom Zeitserver übereinstimmt, und, falls diese Überprüfungen positiv sind, der Rechner (**111**) mit einer Start-up Nachricht (**403**) an die Certification Authority (CA) (**115**) antwortet, wobei die Start-up Nachricht (**403**) die Sender-ID des Rechners (**111**), den zu verwendenden öffentlichen Schlüssel zur Überprüfung der Signatur der vom Rechner (**111**) unmittelbar nach dem Startup produzierten Nachrichten und den Zeitpunkt, ab wann dieser Schlüssel zu verwenden ist, enthält, und wo die Sicherung der Authentizität und Integrität dieser Start-up Nachricht durch eine vom Rechner (**111**) erstellte Signatur mittels eines langen asymmetrischen Start-up Schlüsselpaars erfolgt, wobei der geheime Teil dieses Schlüsselpaars im Rechner (**111**) *tamper-proof* gespeichert ist, und wo die Assoziation zwischen der Sender-ID und dem öffentliche Teil dieses Start-up Schlüsselpaars der *Certification Authority* (**115**) *a priori* als sicher bekannt ist, und wo diese Assoziationen in der *Certification Authority* (**115**) *tamper-resistent* gespeichert sind, und wo *Certification Authority* (**115**) mit einer Start-up ack Nachricht (**404**) antwortet, bevor der Rechner (**111**) mit der normalen Echtzeitverarbeitung beginnt.

10. Verteiltes Echtzeitsystem nach einem der Ansprüche 1 bis 9, **dadurch gekennzeichnet, dass** ein *trusted security center* der *Certification Authority* (**115**) über einen gesicherten Kanal die Assoziation zwischen der im Rechner (**111**) *tamper resistant* gespeicherten Sender-ID und den nach dem Startup zu verwenden öffentlichen Schlüssel zur Überprüfung der Signatur der Nachricht des Senders mitteilt, wobei der geheime Teil dieses Schlüssel im Rechner (**111**) *tamper-proof* gespeichert ist.

11. Verteiltes Echtzeitsystem nach einem der Ansprüche 1 bis 10, **dadurch gekennzeichnet, dass** ein sendender Rechner (**111**) das Bitmuster des Zeitpunkts des Beginns der neuen Schlüsselerstellung als Ausgangswert für die Berechnung einer neuen Zufallszahl verwendet.

12. Verteiltes Echtzeitsystem nach einem der Ansprüche 1 bis 11, **dadurch gekennzeichnet, dass** zum vertraulichen Übertragen von Daten auf einen Rechner (**112**) dieser Rechner (**112**) den öffentlichen Teil eines asymmetrischen Schlüsselpaars an den Sender (**111**) der vertraulichen Daten entsprechend einem Verfahren nach einem der Ansprüche 1 bis 10 sendet, welcher Sender (**111**) dann unter Verwendung des empfangenen Schlüssels einen Geheimtext generiert und an den den öffentlichen Teil eines asymmetrischen Schlüsselpaares sendenden Rechner (**112**) zurücksendet.

13. Verteiltes Echtzeitsystem nach einem der Ansprüche 1 bis 12, **dadurch gekennzeichnet, dass** der Sender von vertraulichen Daten die Länge des zur Verschlüsselung der Daten zu verwendenden Schlüssels von der Dauer abhängen lässt, während der die Daten als *vertraulich* zu behandeln sind.

14. Verteiltes Echtzeitsystem nach einem der Ansprüche 1 bis 13, **dadurch gekennzeichnet, dass** der Security Server (**114**) periodisch eine verschlüsselte Echtzeitnachricht, in der das Ergebnis der Überprüfungen der sensiblen Nachrichten in der vergangenen Periode enthalten ist, an die Certification Agency (**115**) sendet.

15. Verleiltes Echtzeitsystem nach einem der Ansprüche 1 bis 14, **dadurch gekennzeichnet, dass** der aktuelle Zeitwert, die Signatur des Zeitwerts und der öffentliche Schlüssel zur Überprüfung der Signatur in einer einzigen Synchronisationsnachricht übertragen werden.

16. Multi-prozessor Sytem-on-Chip (MPSoC) mit einem auf diesem MPSoC realsierten verteilten Echtzeitsystem nach einem der Ansprüche 1 bis 15, wobei ein *Network on Chip* des MPSoC die Rolle des Switches (**120**) Übernimmt, die Funktion der Rechner (**111**,**112**, **113**) des verteilten Echtzeitsystems von den Cores des MPSoC übernommen ist, und der Security Server (**114**) ein dediziertes Core des MPSoC ist.

## Claims

1. A distributed real-time system, consisting of a plurality of computers (computers 111, 112, 113, 114) which are connected via a central switch (120) and where each computer can periodically send real-time messages containing real-time data to the other computers, and where a distinction is made between *sensitive* and non-*sensitive* real-time messages, and where the sensitive real-time messages that contain sensitive real-time data are recognised by an identification specified *a priori* in the data field, and where all computers have access to a common *sparse* time base, and where each computer has at least one secret asymmetric key for creating a signature for a data structure, and where the key for checking the signature is known to the public,
wherein
the switch (120) additionally also sends all sensitive real-time messages, in addition to the recipients mentioned in the real-time message, to a specified computer, what is known as the security server (114), and wherein
a further computer (115) takes over the role of a *certification authority (CA),* which confirms the authenticity of the public key of a computer, and wherein the security server (114) checks the authenticity and integrity of the sensitive real-time messages received by it from the switch (120), wherein all computers have access to a common *sparse* time base, and where each computer has at least one secret asymmetric key for creation of a signature, and where the associated public key, which is required for checking the authenticity and integrity of the signed data structure, can be requested from the *certification authority (CA)* (115), and wherein a secure start-up protocol with long asymmetric key pairs is processed with the *certification authority (CA)* (115) immediately after power-up of a computer (111), and where short asymmetric key pairs are used for safeguarding the authenticity and integrity of the real-time data in real-time operation once the start-up phase is complete, wherein the key pairs are changed frequently, and wherein confidentiality is ensured with asymmetric key pairs based on the secured authenticity and integrity of the data, wherein the length of the keys used depends on the period of time during which the confidentiality of the real-time data has to be ensured.

2. The distributed real-time system according to Claim 1, **characterised in that** the sensitive real-time messages are sent to the specified computer (111) through the switch (120) in a *tamper-resistant* manner.

3. The distributed real-time system according to Claim 1 or 2, **characterised in that**, once the secured start-up phase is complete and immediately after acquisition of the real-time data of an observation, a real-time message that contains the observation in plain text will be composed and transmitted, and where the next periodic real-time message contains a signature for the observation conveyed in the preceding real-time message, wherein this signature has been created with use of the secret key known only to the sending computer and can be checked against the associated public key.

4. The distributed real-time system according to one of Claims 1 to 3, **characterised in that** a dedicated process in a computer receiving the data determines, with use of the public key, whether the data received in one period matches the associated signature received in the next period.

5. The distributed real-time system according to one of Claims 1 to 4, **characterised in that** the public key for checking the integrity and authenticity of the data of a real-time message is part of the real-time message.

6. The distributed real-time system according to one of Claims 1 to 5, **characterised in that** the dedicated process that undertakes the checking of the real-time data checks, by communication with the *certification authority* (115), whether the public key contained in a real-time message is authentic.

7. The distributed real-time system according to one of Claims 1 to 6, **characterised in that** the secret key for creating the signature and the public key for checking the signature are continually changed in real-time operation.

8. The distributed real-time system according to one of Claims 1 to 7, **characterised in that**, as soon as the real-time processing of a period is complete, a sending process generates a new asymmetric key pair in the background and announces the new public key, including the time point when its validity period begins, in a plurality of real-time messages signed with the old key prior to the expiration of the validity of the old key, and where the sending process, from the given time point when the validity period begins, uses the secret part of the key known only to itself to create the signature for an observation.

9. The distributed real-time system according to one of Claims 1 to 8, **characterised in that**, immediately after *power-up* of a computer (111), this computer sends an initialisation (init) message (401) with its sender ID to the certification authority (CA) (115), and where the certification authority (CA) (115) checks whether this sender ID is contained in the system configuration known to it *a priori,* and wherein, with a positive outcome for the check, the certification authority (CA) (115) responds with an Ack-Init message (402) that contains the current time, the current public key for checking the signature of a time server, and a signature that has been created with the secret part of a long asymmetric Ack-Init key pair, and where the secret part of the Ack-Init key pair is implemented in the certification authority (CA) (115) in a *tamper-proof* manner, and where the computer (111) knows *a priori* the public part of the Ack-Init key pair for checking the signature of this Ack-Init message (402), and where the computer (111) checks, by means of this key, whether the signature and the content of the Ack-Init (402) message match, and where the computer (111) further checks whether the time contained in the Ack-Init message matches the secure time from the time server, and, should the result of these checks be positive, the computer (111) responds to the certification authority (CA) (115) with a start-up message (403), wherein the start-up message (403) contains the sender ID of the computer (111), the public key to be used for checking the signature of the messages produced by the computer (111) immediately after start-up, and the time point from which this key is to be used, and where the safeguarding of the authenticity and integrity of this start-up message is achieved by a signature created by the computer (111) by means of a long asymmetric start-up key pair, wherein the secret part of this key pair is stored in the computer (111) in a *tamper-proof* manner, and where the association between the sender ID and the public part of this start-up key pair is known *a priori* by the *certification* authority (115) to be secure, and where these associations are stored in the *certification authority* (115) in a *tamper-resistant* manner, and where the *certification* authority (115) responds with a start-up Ack message (404) before the computer (111) begins with the normal real-time processing.

10. The distributed real-time system according to one of Claims 1 to 9, **characterised in that** a *trusted security centre of the certification authority* (115) communicates, via a secure channel, the association between the sender ID stored in a *tamper-resistant* manner in the computer (111) and the public key to be used after start-up for checking the signature of the sender's message, wherein the secret part of this key is stored in a *tamper-proof* manner in the computer (111).

11. The distributed real-time system according to one of Claims 1 to 10, **characterised in that** a sending computer (111) uses the bit pattern of the time point for beginning the creation of a new key as the starting value for the calculation of a new random number.

12. The distributed real-time system according to one of Claims 1 to 11, **characterised in that**, for the confidential transmission of data to a computer (112), this computer (112) sends to the sender (111) of the confidential data the public part of an asymmetric key pair in accordance with a method according to one of Claims 1 to 10, said sender (111) then generating a secret text with use of the received key and sending this back to the computer (112) that sent the public part of an asymmetric key pair.

13. The distributed real-time system according to one of Claims 1 to 12, **characterised in that** the sender of confidential data allows the length of the key used for encryption of the data to depend on the period of time during which the data is to be treated as *confidential.*

14. The distributed real-time system according to one of Claims 1 to 13, **characterised in that** the security server (114) periodically sends to the certification agency (115) an encrypted real-time message, in which the result of the checks of the sensitive messages in the previous period is contained.

15. The distributed real-time system according to one of Claims 1 to 14, **characterised in that** the current time value, the signature of the time value, and the public key for checking the signature are transmitted in a single synchronisation message.

16. A multiprocessor system-on-chip (MPSoC) with a distributed real-time system according to one of Claims 1 to 15 implemented thereon, wherein a *network on chip* of the MPSoC takes over the role of the switch (120), the function of the computers (111, 112, 113) of the distributed real-time system is taken over by the cores of the MPSoC, and the security server (114) is a dedicated core of the MPSoC.

## Revendications

1. Système en temps réel distribué, composé d'une pluralité de calculateurs (calculateurs 111, 112, 113, 114) qui sont reliés par un commutateur central (120) et où chaque calculateur peut envoyer périodiquement aux autres calculateurs des messages en temps réel avec des données en temps réel, et où des messages en temps réel sensibles sont différenciés des messages en temps réel non sensibles, et où les messages en temps réel sensibles, qui contiennent des données en temps réel sensibles, sont **caractérisés par** un identifiant défini a priori dans le champ de données, et où tous les calculateurs ont accès à une base de temps distribuée commune, et où chaque calculateur dispose au moins d'une clé asymétrique secrète pour générer une signature d'une structure de données, et où la clé pour la vérification de la signature est connue du public,
dans lequel le commutateur (120) envoie tous les messages en temps réel sensibles non seulement au destinataire mentionné dans le message en temps réel mais également à un calculateur remarquable, le serveur dit de sécurité (114), et dans lequel
un autre calculateur (115) assure le rôle d'une autorité de certification (CA) qui confirme l'authenticité de la clé publique d'un calculateur, et dans lequel le serveur de sécurité (114) vérifie l'authenticité et l'intégrité des messages en temps réel sensibles qu'il a reçus du commutateur (120), dans lequel tous les calculateurs ont accès à une base de temps distribuée commune, et où chaque calculateur dispose d'au moins une clé asymétrique secrète pour générer une signature, et où la clé publique correspondante, qui est nécessaire pour la vérification de l'authenticité et l'intégrité de la structure de données signée, peut être demandée par l'autorité de certification (CA) (115), et dans lequel, immédiatement après la mise sous tension d'un calculateur (111), un protocole de démarrage sûr est développé avec l'autorité de certification (CA) (115) avec des paires de clés asymétriques longues, et où, après la fin de la phase de démarrage, des paires de clés asymétriques courtes sont employées dans le mode en temps réel pour assurer l'authenticité et l'intégrité des données en temps réel, dans lequel les paires de clés sont modifiées fréquemment, et dans lequel, sur la base de l'authenticité et l'intégrité assurées des données, la confidentialité est garantie avec des paires de clés asymétriques, dans lequel la longueur des clés employées dépend de la durée durant laquelle la confidentialité des données en temps réel doit être garantie.

2. Système en temps réel distribué selon la revendication 1, **caractérisé en ce que** l'envoi des messages en temps réel sensibles au calculateur remarquable (111) est exécuté par le commutateur (120) inviolable.

3. Système en temps réel distribué selon la revendication 1 ou 2, **caractérisé en ce que**, après la fin de la phase de démarrage sûre, immédiatement après l'analyse des données en temps réel d'une observation, un message en temps réel, qui contient l'observation en texte clair, est formé et transmis, et où une signature sur l'observation transmise dans le précédent message en temps réel est contenue dans le message en temps réel périodique suivant, dans lequel cette signature a été générée par emploi de la clé secrète connue uniquement par le calculateur émetteur et peut être vérifiée avec la clé publique correspondante.

4. Système en temps réel distribué selon l'une quelconque des revendications 1 à 3, **caractérisé en ce que**, dans un calculateur recevant les données, un processus dédié détermine par emploi de la clé publique si les données reçues au cours d'une période concordent avec la signature associée reçue au cours de la période suivante.

5. Système en temps réel distribué selon l'une quelconque des revendications 1 à 4, **caractérisé en ce que** la clé publique pour la vérification de l'intégrité et de l'authenticité des données d'un message en temps réel fait partie du message en temps réel.

6. Système en temps réel distribué selon l'une quelconque des revendications 1 à 5, **caractérisé en ce que** le processus dédié, qui réalise la vérification des données en temps réel, vérifie par le biais d'une communication avec l'autorité de certification (115) si la clé publique contenue dans un message en temps réel est authentique.

7. Système en temps réel distribué selon l'une quelconque des revendications 1 à 6, **caractérisé en ce que** la clé secrète servant à la génération de la signature et la clé publique servant à la vérification de la signature sont toujours remodifiées en temps réel.

8. Système en temps réel distribué selon l'une quelconque des revendications 1 à 7, **caractérisé en ce que**, dès que le traitement en temps réel d'une période est terminé, un processus d'envoi génère en arrière-plan une nouvelle paire de clés asymétrique et annonce la nouvelle clé publique y compris l'instant de début de sa validité dans plusieurs messages en temps réel signés avec l'ancienne clé avant l'expiration de la validité de l'ancienne clé, et où le processus d'envoi emploie, à partir de l'instant de début de validité indiqué, la partie secrète de la clé, que lui seul connaît, pour générer la signature d'une observation.

9. Système en temps réel distribué selon l'une quelconque des revendications 1 à 8, **caractérisé en ce que**, immédiatement après la mise sous tension d'un calculateur (111), ce calculateur envoie à l'autorité de certification (CA) (115) un message d'initialisation (init) (401) avec son ID d'émetteur et où l'autorité de certification (CA) (115) vérifie si cet ID d'émetteur est contenu dans la configuration du système qu'il connaît a priori, et dans lequel, en cas de résultat positif de la vérification, l'autorité de certification (CA) (115) répond avec un message Ack-Init (402) qui contient le temps actuel, la clé publique actuelle pour la vérification de la signature d'un serveur de temps et une signature, qui a été générée avec la partie secrète d'une longue paire de clés asymétrique Ack-Init, et où la partie secrète de la paire de clés Ack-Init est implémentée de manière inviolable dans l'autorité de certification (CA) (115), et où le calculateur (111) connaît a priori la partie publique de la paire de clés Ack-Init pour la vérification de la signature de ce message Ack-Init (402), et où le calculateur (111) vérifie au moyen de cette clé si la signature et le contenu du message Ack-Init (402) concordent, et où le calculateur (111) vérifie en outre si le temps contenu dans le message Ack-Init concorde avec le temps sûr du serveur de temps, et, si ces vérifications sont positives, le calculateur (111) répond à l'autorité de certification (CA) (115) par un message de démarrage (403), dans lequel le message de démarrage (403) contient l'ID d'émetteur du calculateur (111), la clé publique à employer pour la vérification de la signature du message produit par le calculateur (111) immédiatement après le démarrage et l'instant à partir duquel cette clé doit être employée, et où l'assurance de l'authenticité et de l'intégrité de ce message de démarrage est effectuée par une signature générée par le calculateur (111) au moyen d'une paire de clés asymétrique longue de démarrage, dans lequel la partie secrète de cette paire de clés est stockée de manière inviolable dans le calculateur (111), et où l'association entre l'ID d'émetteur et la partie publique de cette paire de clés de démarrage est connue a priori comme étant sûre par l'autorité de certification (115), et où ces associations sont stockées de manière inviolable dans l'autorité de certification (115), et où l'autorité de certification (115) répond avec un message Ack de démarrage (404) avant que le calculateur (111) commence le traitement en temps réel normal.

10. Système en temps réel distribué selon l'une quelconque des revendications 1 à 9, **caractérisé en ce qu'**un centre de sécurité de confiance de l'autorité de certification (115) communique par le biais d'un canal sécurisé l'association entre l'ID d'émetteur stocké de manière inviolable dans le calculateur (111) et la clé publique à employer après le démarrage pour la vérification de la signature du message de l'émetteur, dans lequel la partie secrète de cette clé est stockée de manière inviolable dans le calculateur (111).

11. Système en temps réel distribué selon l'une quelconque des revendications 1 à 10, **caractérisé en ce qu'**un calculateur émetteur (111) emploie la combinaison de bits de l'instant du début de la génération d'une nouvelle clé en tant que valeur initiale pour le calcul d'un nouveau nombre aléatoire.

12. Système en temps réel distribué selon l'une quelconque des revendications 1 à 11, **caractérisé en ce que**, pour la transmission confidentielle de données sur un calculateur (112), ce calculateur (112) envoie la partie publique d'une paire de clés asymétrique à l'émetteur (111) des données confidentielles conformément à un procédé selon l'une quelconque des revendications 1 à 10, lequel émetteur (111) génère ensuite par utilisation de la clé reçue un texte secret et le renvoie au calculateur (112) qui a envoyé la partie publique d'une paire de clés asymétrique.

13. Système en temps réel distribué selon l'une quelconque des revendications 1 à 12, **caractérisé en ce que** l'émetteur de données confidentielles fait dépendre la longueur de la clé, à employer pour le chiffrement des données, de la durée pendant laquelle les données doivent être traitées de manière confidentielle.

14. Système en temps réel distribué selon l'une quelconque des revendications 1 à 13, **caractérisé en ce que** le serveur de sécurité (114) envoie périodiquement à l'agence de certification (115) un message en temps réel chiffré qui contient le résultat des vérifications des messages sensibles de la période écoulée.

15. Système en temps réel distribué selon l'une quelconque des revendications 1 à 14, **caractérisé en ce que** la valeur-temps actuelle, la signature de la valeur-temps et la clé publique pour la vérification de la signature sont transmises dans un seul message de synchronisation.

16. Système multiprocesseur sur puce (MPSoC) sur lequel est réalisé un système en temps réel distribué selon l'une quelconque des revendications 1 à 15, dans lequel un réseau sur puce du MPSoC se charge du rôle du commutateur (120), la fonction des calculateurs (111, 112, 113) du système en temps réel distribué est assurée par le coeur du MPSoC et le serveur de sécurité (114) est un coeur dédié du MPSoC.
